# EUROPEAN PATENT APPLICATION

(11) **EP 0 801 221 A2**
(43) Date of publication of application: **15.10.1997**
(21) Application number: 97302405.2
(22) Date of filing: 08.04.1997
(51) Int. Cl.: F02K 1/76

(54) **Actuating system for an aircraft thrust reverser**

(30) Priority: 09.04.1996 GB 9607375; 16.04.1996 GB 9607859
(71) Applicant: LUCAS INDUSTRIES public limited company, Solihull, B90 4LA (GB)
(72) Inventor: Harvey, John Herbert, Perton, Wolverhampton WV6 7SJ (GB); Hiett, John Edward, Oxley, Wolverhampton WV10 6TW (GB); Hudson, Tim, Telford, Shropshire TF2 9QW (GB); McKay, Richard John, Brewood, Staffs. ST19 9DX (GB); Urbanosky, Thomas F., Cincinnati, Ohio 45215 (US)
(74) Representative: Waite, Anthony William

(57) **Abstract**

A thrust reverser system for a gas turbine aircraft engine has a plurality of fluid pressure-operable actuators (11A, 11B) for operating a thrust reverser (10), the jacks being interconnected by synchronising means. A first valve (53) is operable to connect the actuators to a source of fluid under pressure for deployment of the thrust reverser. At least two of the actuators (11B) are provided respectively with locks (55, 56), at least one of which (55) is releasable by fluid pressure supplied by way of second valve means (54) operable independently of the first valve means (53). The arrangement is such that deployment of the thrust reverser is prevented until the second valve (54) is operated to release the lock (55).

## Description

This invention relates to a thrust reverser system and is particularly concerned with the locking of such a system against inadvertent operation.

A known aircraft thrust reverser system for use with a fan type gas turbine engine includes a cowl which is movable axially relative to the rotary axis of the engine to uncover openings in which are located forwardly directed louvres. The resulting air flow through the openings creates a reverse thrust which will act to slow the forward movement of the aircraft. The axial movement of the cowl is effected by at least two fluid pressure operable jacks which are interconnected by a flexible shaft to ensure that the movements of the jacks are synchronised. The system also incorporates a locking arrangement to prevent the cowl from moving to uncover the aforesaid openings until required by the pilot of the aircraft.

In order to provide the required security against failure and inadvertent operation, it is known, in such systems, to provide so called primary, secondary and tertiary locks, each of which must be disabled before the cowl can be moved to obtain thrust reversal. Such a locking arrangement is complex and the object of the present invention is to provide a thrust reverser system in a simpler form in which the required reliability and security against inadvertent operation of the system can be obtained with fewer locks.

According to the invention a thrust reverser system comprises a plurality of fluid pressure-operable actuators for operating a thrust reverser, synchronising means interconnecting the actuators and acting to maintain operating movement of the latter substantially in synchronism, first valve means operable to connect the actuators to a source of fluid under pressure for deployment of the thrust reverser, at least two of the actuators being provided respectively with locks, at least one of which locks is releasable by fluid pressure supplied by way of second valve means operable independently of the first valve means, the arrangement being such that deployment of the thrust reverser is prevented until the second valve is operated to release said at least one lock.

In the accompanying drawings:-
Figure 1 shows in perspective the layout of the essential components of one example of a thrust reversal system;
Figure 2 is a section through part of one of the jacks seen in Figure 1;
Figure 3 shows the hydraulic circuit diagram of the system seen in Figure 1;
Figure 4 is a part-sectional side elevation showing a switch-actuating mechanism for incorporation in one of the jacks of Figure 2, and
Figure 5 shows a further example of one of the jacks seen in Figure 1.

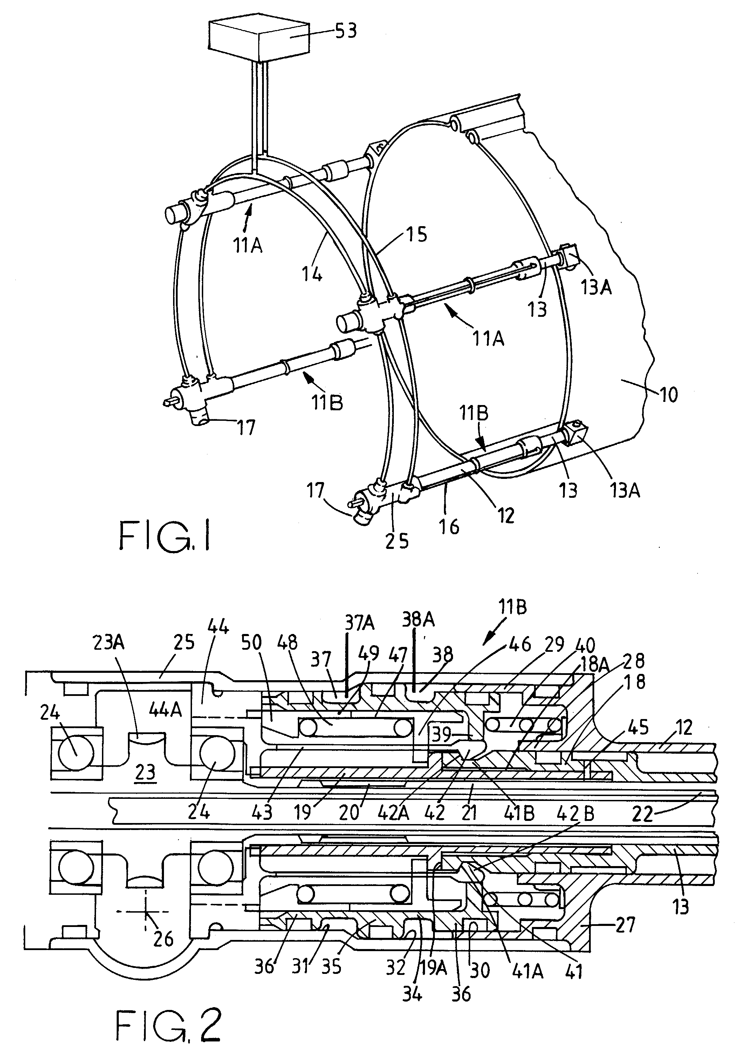

In Figure 1 of the drawings there is shown part of a cowl 10 of a gas turbine aircraft engine which, when aircraft braking assistance is required, is deployed to uncover openings in the side of the engine casing so as to allow air pressurised by the engine fan to flow therethrough. The openings are provided with louvres which direct the air forwardly thereby to create a reverse thrust. The movement of the cowl in the deploy and stow direction is effected, in the example, by four jacks 11A, 11B of the fluid pressure operable piston cylinder type, the cylinders 12 of which are mounted on the engine casing and the piston rods 13 of which mount couplings 13A which are attached to the cowl.

The upper pair of jacks 11A are simple piston/cylinder units incorporating electrical feedback whereas each of the lower pair of jacks 11B incorporates a lock mechanism to be described. Fluid under pressure, conveniently hydraulic fluid, is supplied to the jacks through pipes 14 and 15 to deploy the cowl 10. The pipe 15 is connected by short branch pipes 16 to the remote ends of the cylinders 12 respectively and it is convenient for at least the pipe 14 to have its ends terminated in the lower jacks 11B. Associated with the lower jacks 11B are handwinding units 17 respectively whereby for maintenance purposes and in the absence of hydraulic fluid under pressure, the cowl 10 can be moved between its deployed and stowed positions.

The pipe 14 besides serving to convey hydraulic fluid also accommodates a rotary flexible shaft which is coupled to each of the jack pistons as will be described, to ensure that each jack extends and retracts in synchronism with the others.

In Figure 2 of the drawings there is shown a section through part of one of the jacks 11B. The piston rod 13 is hollow and is integrally formed with an elongate annular piston 18. The internal surface of the piston over a substantial portion of its length is recessed to accommodate an elongate sleeve 19 which extends beyond the piston. A portion of the sleeve 19 is in screw threaded engagement with the piston at 18A and the sleeve is provided with a flange 19A which abuts against the end of the piston. A pin 45 is provided to secure the sleeve and the piston against relative rotation and thereby effectively to secure these components together. On its internal surface the sleeve carries a thread formation 20 reversibly meshing with a complementary thread formation 21 which is formed on the outer peripheral surface of a tubular member 22 extending within the piston rod. The tubular member 22 is formed integrally with a pinion body 23 which is mounted for rotation in bearings 24 supported in a jack casing 25. The tubular member 22 is restrained against axial movement by the bearings 24 and is rotated by the action of the reversible thread connection 20, 21 as the piston 18 moves axially in the cylinder. The pinion body 23 is provided with teeth 23A which engage with complementary teeth formed on a short shaft (not shown) which is coupled to the aforesaid flexible shaft. The axis of the short shaft is indicated at 26. As a result of interconnecting the respective jack pistons in this manner by way of the flexible shaft, the pistons are made to extend and retract in synchronism. It will be appreciated that the sleeve 19 could be formed integrally with the piston, and the thread formation 20 would then be formed on the internal surface of the piston.

The cylinder 12 is integrally formed with an annular end cap 27 and this is formed with an inner axially extending annular flange 28 and an outer axially extending annular flange 29. The inner surface of the inner flange forms an extension of the surface of the cylinder 12 and the outer surface of the outer flange 29 is in sealing engagement with the casing 25.

The inner surface 30 of the outer flange 29 and the inner surface 31 of a portion of the casing spaced axially from the free end of the flange are of the same diameter whilst the inner surface 32 of the intervening casing portion has a larger diameter. These surfaces are in sealing engagement with an axially movable hollow plunger 34 having an inner land 35 and outer lands 36, each of the lands being provided with a sealing ring to effect sealing with the respective surfaces. On opposite sides of the inner land 35 is defined a pair of chambers 37, 38 and the casing is provided with fluid connections to these chambers illustrated schematically at 37A, 38A respectively.

The inner surface of the plunger 34 is provided with a radially inwardly extending flange or lock member 39 and the plunger is biased away from the end cap 27 by means of a coiled spring 40 acting between this flange and the end cap.

Formed in the outer periphery of the piston 18 is a circumferential notch 41 and a plurality of tines 42 is provided for engagement within the notch. The notch 41 has radially outwardly diverging opposed sides 41A, 41B and each tine has corresponding inclined faces 42A, 42B, for the purpose to be described. The tines are mounted on the ends respectively of resilient legs 43 which extend from an annular support member 44 located in the casing and serving to support the axially inner one of the bearings 24. The member 44 also acts as a stop to limit the movement of the plunger 34 under the action of the spring 40. The support member 44 also has a radially inwardly extending flange portion 44A which is slotted to receive the slotted end portion of the elongate sleeve 19 when the piston is in its illustrated retracted position.

The tines 42 and the notch 41 are positioned as shown so that when the cowl 10 is in the stowed position, the tines enter into the notch and are held therein by the lock member 39 so that the piston 13 and the cowl 10 are locked against movement towards the deployed position of the cowl. The flange 19A on the sleeve 19 forms a secondary load path between the tines and the piston.

As shown in Figure 2, the flange 19A of the sleeve 19 is engaged by a radially inwardly extending flange 46 integrally formed with an axially extending sleeve 47 which is slidably supported on the internal surface of the plunger 34. The flange 46 is slotted to accommodate the tine supporting legs 43 and is biased by means of a spring 48 in a direction towards the tines 42. The movement of the sleeve 47 against the action of the spring 48 is limited by the engagement of the end of the sleeve with the end of a further sleeve 49 which extends from a spring abutment 50 engaged with the support member 44. In the stowed and locked position of the piston a clearance exists between the lock member 39 and the adjacent end of the sleeve 47. The spring 48 is stronger than the spring 40 as will be explained.

The interior of the casing 25 is in communication with the pipe 14. The cylinder 12, at its end remote from the casing 25, is in communication with the pipe 15 by way of the respective pipe 16. The effective end area of the portion of the piston 18 within the casing 25 is greater than that of the opposite end of the piston due to the fact that the remote end of the piston rod 13 extends from the casing, leaving a reduced annular effective piston area at this end. Therefore if the pipe 14 is connected to the same source of fluid under pressure as the pipe 15, a resultant force will be developed on the piston 18 acting in the direction to deploy the cowl 10. However, the end areas of the plunger 34 within the casing are the same so that there is no resultant force acting to cause movement of the plunger against the action of the spring 40. The lock member 39 therefore retains the tines 42 in the notch 41 so that no movement of the piston 18 can take place and the cowl 10 consequently remains in the stowed position.

In order to allow the tines 42 to move radially outwardly for cowl release under the action of the force developed on the piston 18, it is necessary to move the plunger 34 against the action of the spring 40. This is achieved by connecting the space 37 to a control pressure, the space 38 being in permanent communication with a drain. An axially facing side face of the centre land 35 has a greater area than that of the opposing side face of the land 36, leading to a resultant force urging the plunger 34 towards the right-hand end of Figure 2, against the action of the spring 40. Fluid is displaced from the space 38 during this movement. Movement of the plunger towards the right moves the locking member 39 out of engagement with the tines 42 thereby releasing the lock. If the interior of the casing is pressurised, the piston 18 is urged in the direction to deploy the cowl 10, the tines 42, by virtue of their inclined faces 42A and the inclined face 41A of the notch 41, being urged radially outwardly against the resilience of the legs 43.

Under the action of the spring 48, the sleeve 47 follows the movement of the piston 18 and engages with the lock member 39 to hold the lock member in the unlocked position against the action of the spring 40.

This applies even if the control pressure is reduced or if, due to leakage past the central land 35 and blockage of the drain passage extending from the space 38, the pressures in the two spaces 37 and 38 become equal. If for some reason the pressures in the two spaces 37, 38, are equal at the start of the deploy sequence, the plunger will be pressure balanced and no movement will take place so that the tines will remain in the locked position.

In order to stow the cowl, the control pressure in the space 37 is reduced and the pipe 14 connected to a low pressure. In this situation the piston 18 is driven, by the now predominant pressure of pipe 15 in the cylinder 12, towards the position shown in Figure 2, thereby moving the cowl towards the stowed position. As the piston moves, the flange 19A on the sleeve 19 engages the tines 42 to move them outwardly and then engages the flange 46 so that the sleeve 47 is displaced against the action of the spring 48, permitting the plunger 34 to perform a return movement under the action of the spring 40. Since the tines are now riding on the outer surface of the flange 19A and the adjacent part of the piston 18, the return movement of the plunger and its locking member 39 cannot be completed until the tines have moved into the notch 41. It will be noted that in the stowed and locked position the sloping front edges 42B of the tines are spaced from the adjacent sloping side wall 41B of the notch.

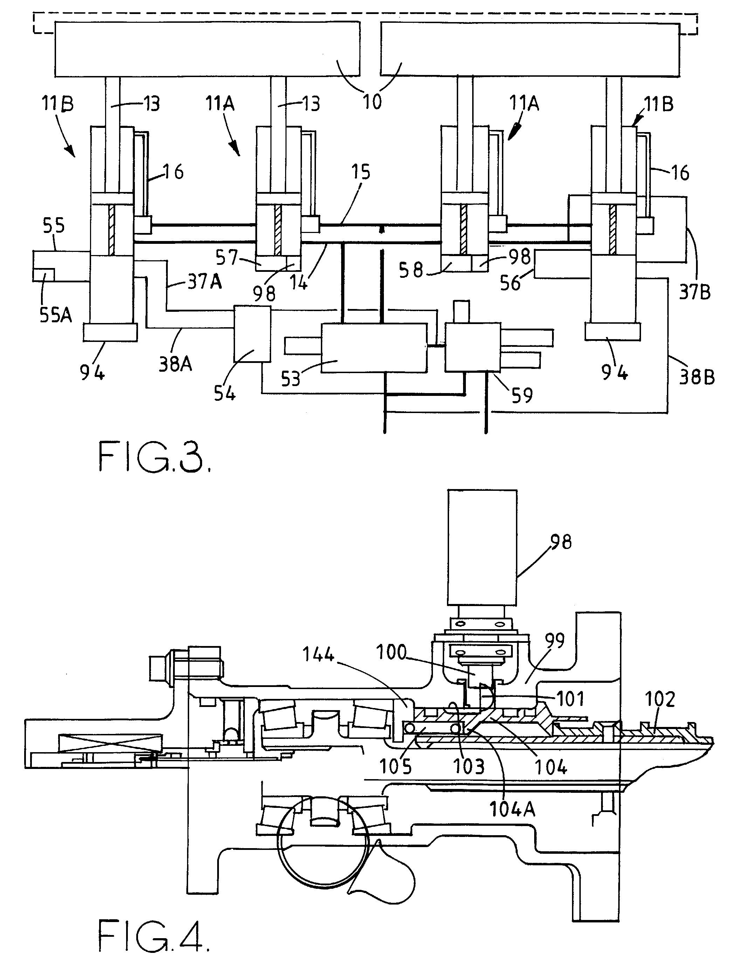

Figure 3 shows various other items of the thrust reversal system described above. There can be seen in particular a first valve 53 which controls the flow of fluid under pressure to and from the pipes 14, 15, and a second valve 54 in the form of a solenoid valve which controls the supply of fluid under pressure via line 37A to the space 37 of the plunger 34 of the one jack 11B. The return line 38A from the space 38 is also shown. Corresponding lines for the other jack 11B are shown respectively at 37B, 38B. The lock 56 is de-activated to permit deploy movement of the associated jack 11B by the direct supply of pressure fluid to this jack from the valve 53. The system also includes an isolation valve 59 which can be closed to prevent the supply of fluid under pressure to the remaining components of the system. Sensor switches 55A and 56A are provided on the locks 55 and 56 to provide an indication of the condition of these locks.

It will be seen that, by contrast, the other lock 55 can only be de-activated by operation of the solenoid valve 54, and since the latter is operable independently of the valve 53 which controls the cowl deployment pressure and activates the other lock or locks, it is necessary to perform three distinct operations in order to deploy the cowl. This provides the necessary security against inadvertent deployment of the cowl and is achieved with a reduced number of locks as compared with some conventional systems. The system of the invention may provide this advantage whether the locks are identical, as illustrated, or whether they are different from each other.

Also provided are position transducers 57, 58 which generate signals indicative of the positions of the respective piston rods 13 of the jacks 11A. These signals are supplied to an engine control unit. A sensor switch may be mounted on the cowl 10 to provide an indication of movement of the cowl away from the stowed position, such movement being conveniently assisted by the resilience of a seal interposed between the cowl and the engine casing. Such movement may be due to the release of one of the locks and is allowed due to compliance of the system components including the cowl.

In a modification of the system shown in Figure 3, the solenoid valve 54 is connected directly to the fluid pressure supply line instead of by way of the isolating valve 59. This obviates the possibility with the Figure 3 system, of failure to determine a malfunction of the lock 55 in the event that the isolating valve 59 and the solenoid valve are operated simultaneously. In addition, each jack 11A is provided with a sensor switch which is responsive to the position of the respective piston to provide a signal indicative of when the piston is in the cowl stowed position.

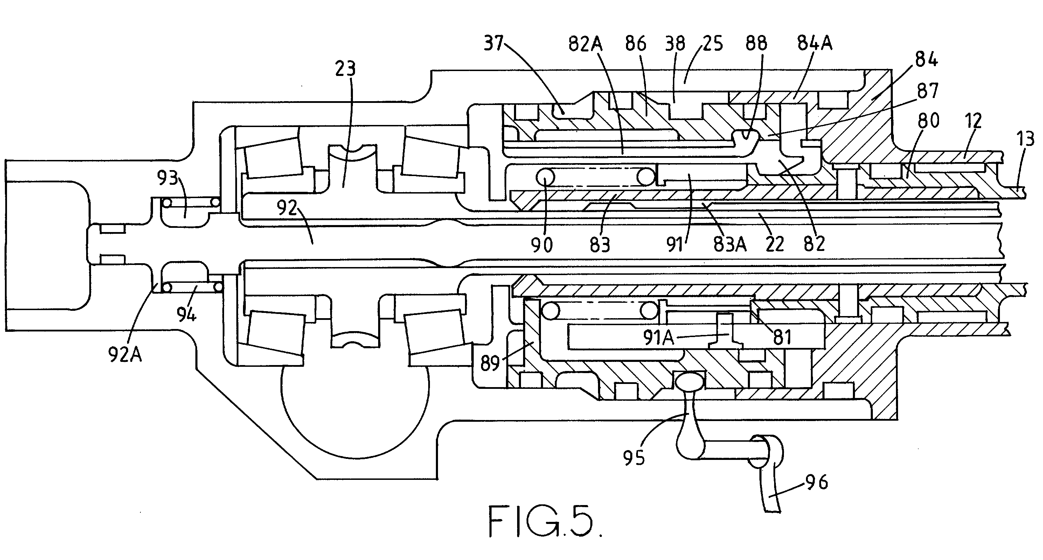

Figure 4 shows one example of an operating mechanism for a "stow" sensor switch for incorporation in one of the non-locking jacks 11A. The switch is indicated generally at 98, being mounted on a casing 99 and having an operating element 100 which is engaged by a ball 101. The ball is urged radially outwardly when a piston 102, equivalent to the piston 13 of Figure 2, is in the illustrated retracted position, by a ramp surface defined at one end of a circumferential groove 103 formed on a sleeve 104 slidable on the internal surface of the casing 99. One end of the sleeve is engaged by the piston 102 as the latter moves to the retracted position and the sleeve is biased in the opposite direction by a spring 105, one end of which engages an internal flange 104A of the sleeve and the other end of which engages the adjacent bearing housing 144. During extension of the piston the ball 101 moves off the ramp surface to allow the operating element of the switch to move inwardly.

A modified version of the jacks 11B is seen in Figure 5 in which, in correspondence with Figure 2, the piston rod is shown at 13 and the cylinder at 12. The piston rod is integrally formed with a piston 80 which is similar to the piston 18 of the example of Figure 2 except that instead of the notch 41 it is provided with an abutment flange 81 for engagement by tines 82. As in the example of Figure 2 the piston is provided with an elongate tubular sleeve 83 which is secured within a recess in the piston. The sleeve is provided with a reversible thread formation 83A which is engaged with a complementary thread formation formed on the periphery of the tubular member 22, in a manner similar to that illustrated in Figure 2.

An end cap 84 has a peripheral axially extending flange 84A about which is located the casing 25. As in the example of Figure 2, the casing has a stepped internal surface which, together with the internal surface of the flange 84A supports a plunger 86. The outer configuration of the plunger corresponds to that seen in Figure 2. On its internal surface the plunger is formed with a locking rib 87 for engagement with the tines 82 and immediately adjacent the rib there is formed a recess 88 into which the tines can move when the plunger is moved to the unlocked position. At its opposite end the plunger is provided with an inwardly directed flange 89 provided with radial slots which accommodate the resilient tine support legs 82A. The flange 89 forms an abutment for one end of a coiled compression spring 90 the other end of which is engaged by a sleeve 91 engaged with the piston 80. Extending within the tubular member 22 is a switch operating member 92. The operating member extends through the pinion body 23 and has a flange 92A which is urged into engagement with the end wall of a chamber 93 by a spring 94. The operating member has an extension which is provided with a switch operating detent, the switch (not shown) constituting the 'deploy' switch and being mounted on the surrounding housing.

In operation in order to deploy the cowl, the control pressure is applied from the valve 54 (Figure 3) to the space 37 at the left of the centre land of the plunger 86 and this results in movement of the plunger against the action of the spring 90, moving the locking rib 87 out of engagement with the outer surface of the tines 82 and bringing the recess 88 into register with the tines.

When fluid under pressure is supplied from the fluid pressure supply valve 59 (Figure 3) via the direction control valve 53 to the interior of the casing 25 the piston 80 and the associated piston rod 13 will extend to deploy the cowl. The initial movement of the piston effects displacement of the tines 82 outwardly into the recess 88 and they are maintained in this position by the sleeve 91 which moves with the piston under the action of the spring 90 during the initial piston movement. The plunger is thus locked in position. The extent of movement of the sleeve 91 is determined by a pin 91A which projects inwardly from the plunger 86 and locates in a slot formed in the sleeve. The slot is open at its end adjacent the flange 81 but is closed at its opposite end. The fact that the plunger is held in its tine unlocked position means that it will maintain this position even if the control pressure is removed or the space 38 to the right hand side of the plunger becomes filled with fluid under pressure.

As the piston reaches its fully extended position the switch operating member 92 will be moved against the action of the spring 94 to actuate the switch which thereby provides a signal indicative of the fact that the cowl is fully deployed.

When it is required to stow the cowl, the interior of the casing 25 is connected to a drain as also is the space 37 to the left of the centre land of the plunger 86. The plunger remains in the tine unlocked position but the piston 80 moves under the action of the fluid pressure in the cylinder 12 towards the position shown. As the piston approaches this position, it engages the sleeve 91 to displace the sleeve against the action of the spring 90. As the flange 81 on the piston moves beneath the tines 82 to the position shown, the tines move inwardly behind the flange to lock the piston and at the same time they move out of the recess 88 to free the plunger. The plunger can then move under the action of the spring 90 to the position shown, and the tines are held in the piston locking position by the locking rib 87. The switch operating member 92 moves under the action of the spring 94 to switch off the 'deploy' signal as soon as the piston starts its return movement.

It is necessary to provide a signal indicative of the position of the plunger 86 and since it is also necessary to be able to move the plunger by hand to the unlocked position for maintenance purposes, it is convenient to combine these two requirements. As shown in Figure 5, a pivotal lever 95 is engaged with the plunger in the groove forming the space 38 on the right hand side of the centre land. The lever 95 is coupled to a manually operable lever 96 by any convenient mechanism operable to convert rotary movement of the lever 96 in a first plane to angular movement of the lever 95 in a plane perpendicular to the first. A sealing arrangement is provided to ensure that there is no leakage of fluid. A switch (not shown) is provided and is responsive to the position of the lever 95 to provide an indication of the 'lock' position.

## Claims

1. A thrust reverser system comprising a plurality of fluid pressure-operable actuators (11A, 11B) for operating a thrust reverser (10), synchronising means interconnecting the actuators and acting to maintain operating movement of the latter substantially in synchronism, first valve means (53) operable to connect the actuators to a source of fluid under pressure for deployment of the thrust reverser, at least two of the actuators (11B) being provided respectively with locks (55, 56), at least one of which locks (55) is releasable by fluid pressure supplied by way of second valve means (54) operable independently of the first valve means (53), the arrangement being such that deployment of the thrust reverser is prevented until the second valve (54) is operated to release said at least one lock (55).

2. A system according to Claim 1, wherein a lock (56) not releasable by way of the second valve means (54) is releasable by fluid pressure supplied by way of the first valve means (53) to the associated actuator (11B) for deployment of the thrust reverser (10).

3. A system according to Claim 1 or Claim 2, wherein the first and second valve means (53, 54) are connected to a common pressure source.

4. A system according to any one of Claims 1 to 3, wherein the actuators are interconnected by pressure fluid pipes (14, 15) connectable by the first valve means (53) to the fluid pressure source, the second valve means (54) being connected to the pressure source upstream of the first valve means and being operable selectively to apply fluid pressure along a first path (37A) to said at least one lock, whilst providing a second path (38A) serving as a permanent fluid return path from said at least one lock (55).

5. A system according to any one of the preceding claims, wherein said at least one lock (55) includes a locking device (41, 42) serving, in a locking position thereof to retain a thrust reverser-operating piston (18) of the associated actuator (11B) in retracted position, and fluid pressure-operated retention means (34) for the locking device normally urged towards a position in which it retains the locking device in its locking position, operation of the second valve means (54) to apply fluid pressure to the retention means (34) resulting in movement of the latter such as to release the locking device from its locking position and thereby free the piston (18) for thrust reverser deployment.

6. A system according to Claim 5, wherein the retention means (34) is movable under the influence of resultant force arising from pressure applied to different opposed areas (35, 36) thereof.

7. A system according to Claim 5 or Claim 6, wherein an auxiliary locking element (47) is held in an inoperative position by abutment means (19A) associated with the piston (18) when the latter is in its retracted position, said element being movable, when the piston moves in the deployment direction, to a position in which it prevents return movement of the retention means (34) from its lock-release position until the piston returns to its retracted position.

8. A system according to Claim 7, wherein the retention means (34) and auxiliary locking element (47) are urged respectively by first and second springs (40, 48) towards their respective locking positions, the force of the second spring (48) being greater than that of the first spring (40), such that following deploying movement of the piston (18), the retention means (34) cannot be returned by the first spring to its locking position until the locking element (47) is returned towards its locking position by return movement of the piston.

9. A system according to any one of Claims 5 to 8, wherein the locking device is at least one resiliently mounted tine (42) engageable with at least one corresponding notch (41) in the piston (18) or a member fast with the latter.

10. A system according to any one of the preceding claims, wherein the second valve (54) is a solenoid valve.

11. A system according to any one of Claims 1 to 3, wherein the second valve (54) is connected directly to the pressure fluid source.

12. A system according to Claim 5 or Claim 6, wherein the retention means (86) and locking device (82) are arranged so that when the retention means (86) is moved to a position in which the locking device is freed from its locking position, the locking device acts to maintain the retention means (86) in said position.

13. A system according to Claim 12, wherein the locking device (82) is shaped so that, in its locking position, it engages a recess in the piston (80) to lock the latter in its retracted position, and, when released from the piston recess, it engages a recess (88) in the retention means which comes into register with the locking device (82) when the retention means (86) moves to free the locking device.

14. An actuator for a thrust reverser system according to any one of the preceding claims, comprising a pressure fluid-operable piston (18) movable in a cylinder by actuating fluid pressure between a retracted position and an extended position in which, in use, an associated thrust reverser (10) is deployed, a lock including locking means (41, 42) serving to retain the piston in its retracted position, and fluid pressure-operable retention means (34) for the locking device normally urged towards a position in which it retains the locking device in its locking position, and being movable by the application of fluid pressure to release it from its locking position and thereby free the piston (18) for thrust reverser deployment.

15. An actuator according to Claim 14, wherein the retention means (34) is movable under the influence of resultant force arising from pressure applied to different opposed areas (35, 36) thereof.

16. An actuator according to Claim 14 or Claim 15, wherein an auxiliary lock element (47) is held in an inoperative position by abutment means (19A) associated with the piston (18) when the latter is in its retracted position, said element (47) being movable, when the piston moves in the deployment direction, to a position in which it prevents return movement of the retention means (34) from its lock-release position until the piston (18) returns to its retracted position.

17. An actuator according to Claim 14, wherein the retention means (34) and auxiliary locking element (47) are urged respectively by first and second springs (40, 48) towards their respective locking positions, the force of the second spring (48) being greater than that of the first spring (40), such that following deploying movement of the piston (18), the retention means cannot be returned by the first spring (40) to its locking position until the locking element (47) is returned towards its locking position by return movement of the piston.
